# NEUE EUROPÄISCHE PATENTSCHRIFT

(11) **EP 1 022 506 B2**
(45) Veröffentlichungstag und Bekanntmachung des Hinweises auf die Entscheidung über den Einspruch: **14.03.2007**
(45) Hinweis auf die Patenterteilung: 15.10.2003
(21) Anmeldenummer: 99100838.4
(22) Anmeldetag: 19.01.1999
(51) Int. Cl.: F16L 58/00

(54) **Schutzeinrichtung für Pipelines**
Protecting device for pipelines
Dispositif de protection pour tuyaux

(43) Veröffentlichungstag der Anmeldung: 26.07.2000
(73) Patentinhaber: Leutron GmbH, 70771 Leinfelden-Echterdingen (DE)
(72) Erfinder: Fasler, Robert, 6030 Ebikon (CH)
(74) Vertreter: Wasmuth, Rolf

(56) Entgegenhaltungen:
- CA-C- 2 110 020
- DE-A- 2 934 745
- DE-A- 4 102 694
- US-A- 5 318 678
- Bauelemente der Elektronik und ihre Grundschaltungen, H. Boeger u.a., 6. Auflage, Bestell-Nr. 97214, Verlag H.Stam GmbH, Koeln-Porz, Seite 65, veroeffentlich 1982

## Beschreibung

Die vorliegende Erfindung betrifft eine Schutzeinrichtung für Pipelines, die mit einer kathodische Korrosionsschutzanlage ausgerüstet sind.

Die kathodischen Korrosionsschutzanlagen dienen bekanntlich dazu, den durch die elektrolytische Wirkung des die Pipeline umgebenden Erdreichs an den Rohren der Pipeline entstehenden und Korrosion verursachenden Ladungsaustausch zu verhindern, indem an die Rohre eine negative Spannung angelegt wird, welche den genannten Ladungsaustausch kompensiert.

Da Pipelines oft in der Nähe von Mittel- und Hochspannungsleitungen gerührt sind, werden in den Rohren Wechselspannungen induziert, die ebenfalls zur Korrosion der Rohre führen. Es wäre relativ einfach, die induzierten Wechselspannungen durch Kurzschliessen der Gleichspannung zu neutralisieren, was aber wegen der kathodischen Korrosionsschutzanlage nicht möglich ist. Eine bekannte Lösung für dieses Problem bietet die sogenannte Kirk-Zelle, welche Wechselspannungen kurzschliesst und bei Gleichspannungen sperrt. Die Kirk-Zelle ist aber teuer und benötigt ausserdem, da sie auf dem Prinzip einer Batterie beruht, eine regelmässige Wartung. Ein Ersatz der Kirk-Zelle durch Messung der Wechselspannung und Anlegen einer entsprechenden Gleichspannung ist ebenfalls teuer und ausserdem störungsanfällig.

Aus der CA 2 110 020 ist eine Schutzeinrichtung für Pipelines bekannt, die mit einer kathodischen Korrosionsschutzanlage ausgerüstet ist, wobei die Schutzeinrichtung ein aus einem L-Glied und einer Kapazität bestehendes Filter aufweist, welches eine zweistufige Blitz- und Überspannungsschutzschaltung aufweist, die aus einem Grobschutz und einem Feinschutz und eine Entkloppelung zwischen diesen besteht, wobei die Entkloppung duch das L Glied gebildet ist, wobei der Feinschutz durch eine parallel zur Kapazität angeordnete bidirektionale Thyristoranordnung und der Grobschutz durch einen varistor gebildet ist.

Durch die Erfindung soll eine wartungsfreie Schutzeinrichtung der eingangs genannten Art angegeben werden, welche eine Kompensation von durch Mittel- und/oder Hochspannungsleitungen induzierten Wechselspannungen ermöglicht, ohne die Wirkung des kathodischen Korrosionsschutzes zu beeinträchtigen.

Die gestellte Aufgabe wird erfindungsgemäss gelöst durch die Merkmale des Anspruch 1, weiterbildungen der Erfindung ergeben sich aus den weiteren Ansprüchen.

Das aus dem LC-Glied und der Kapazität bestehende Filter, welches mit einem Blitz- und Überspannungsschutz versehen ist, sperrt bei Gleichspannungen und leitet bei Wechselspannungen, so dass die Pipeline gegen die durch induzierte Wechselspannungen verursachte Korrosion geschützt ist. Die Kapazität wird durch den Entladewiderstand laufend entladen. Diese Entladung ist deswegen wichtig, weil an der Kapazität, wenn sie sich nicht entladen könnte, beim Auftrennen der Schutzeinrichtung eine sehr hohe Spannung auftreten könnte.

Gemäss einer bevorzugten Ausführungsform der erfindungsgemässen Schutzeinrichtung ist der Entladewiderstand hochohmig ausgebildet und hat somit keinen Einfluss auf die Schutzdiode und auf die Funktion des Filters in seiner Wirkung auf Gleichund Wechselspannungen.

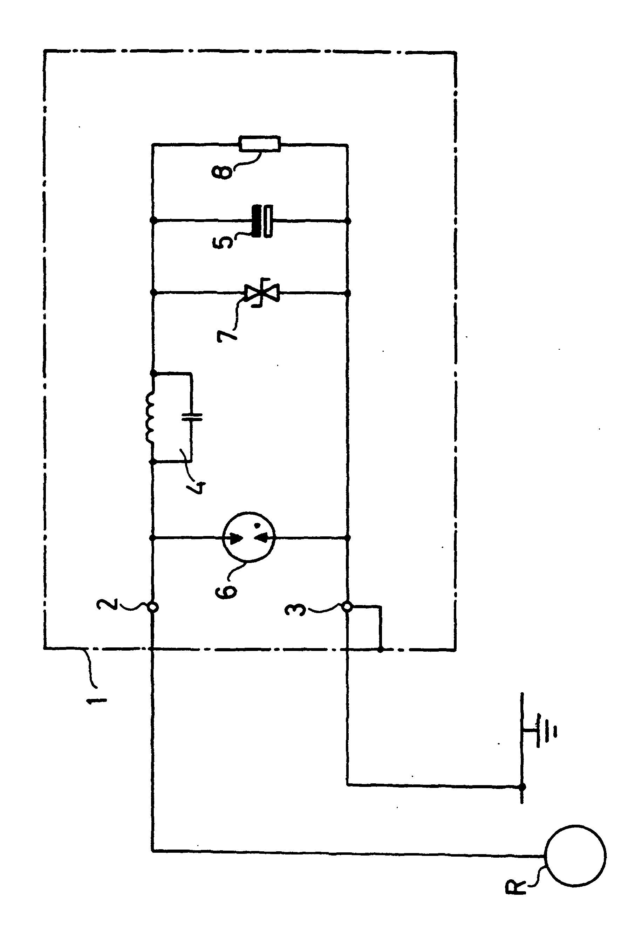

Im folgenden wird die Erfindung anhand eines in der einzigen Zeichnung dargestellten Ausführungsbeispiels näher erläutert, wobei die Zeichnung ein Blockschema einer erfindungsgemässen Schutzeinrichtung zeigt.

Darstellungsgemäss weist die mit dem Bezugszeichen 1 bezeichnete Schutzeinrichtung zwei Eingangsklemmen 2 und 3 auf, von denen die Klemme 2 mit der zu schützenden Rohrleitung R und die Klemme 3 mit Erde verbunden ist. Die Schutzeinrichtung 1 enthält als Kernstück ein aus einem LC-Glied 4 und einer Kapazität 5 gebildetes Filter, welches bei Gleichspannungen sperrt und bei Wechselspannungen leitet, und welches eine zweistufige Blitz- und Überspannungsschutzschaltung aufweist. Die letztere besteht aus einem Grobschutz zum Schutz gegen Blitzeinschlag und transiente Überspannungen und einem Feinschutz und einer Entkopplung zwischen diesen.

Der Grobschutz ist durch eine gasgefüllte Trennfunkenstrecke 6, der Feinschutz ist durch eine parallel zur Kapazität 5 angeordnete bidirektionale Schutzdiode 7 und die Entkopplung ist durch das LC-Glied 4 gebildet. Die Kapazität 5 ist aus Sicherheitsgründen mit einem hochohmigen Parallelwiderstand 8 beschaltet.

Bei einem Blitzeinschlag fliesst durch die Schutzdiode 7 ein Strom I, wodurch sich an der Spule des LC-Gliedes 4 mit der Induktivität L eine Spannung U nach der Formel U = L(dI/dt) aufbaut. Zu diesem Zweck ist die Schutzdiode 7 so ausgelegt, dass der Blitzstrom die Kapazität 5 nicht beschädigt. Sobald die Spannung U_{L} + U_{D} (U_{L}: Spannungsabfall an der Spule des LC-Gliedes 4, U_{D}: Spannungsabfall an der Schutzdiode 7) die Ansprechspannung der gasgefüllten Trennfunkenstrecke 6 erreicht, zündet diese und der Blitzstrom wird gegen Erde abgeleitet, ohne dass das aus dem LC-Glied 4 und der Kapazität 5 bestehende Filter oder die Schutzdiode 7 beschädigt wird.

Im Rohr R durch eine in der Nähe der Pipeline geführte Mittel- oder Hochspannungsleitung induzierte Wechselspannung wird durch die Kapazität 5 kurzgeschlossen, wogegen Gleichspannungen gesperrt sind. Die Kapazität 5 wird ständig über den Entladewiderstand 8 entladen, der ein hochohmiger Widerstand von beispielsweise 10kOhm ist und dadurch keinen Einfluss auf die Schutzdiode 7 und auf die Kapazität 5 hinsichtlich ihrer Funktion auf Gleich- und Wechselspannungen hat.

Die ständige Entladung der Kapazität 5 über den Widerstand 8 hat den Vorteil, dass dann, wenn an den Eingangsklemmen 2 und 3 beispielsweise durch Auftrennen der Schutzeinrichtung keine Spannung liegt, an der Kapazität 5 keine unerwünschten Spannungen auftreten können.

## Patentansprüche

1. Schutzeinrichtung für Pipelines, die mit einer kathodischen Korrosionsschutzanlage ausgerüstet sind, wobei die Schutzeinrichtung ein aus einem parallel LC-Glied (4) und einer Kapazität (5) bestehendes Filter (4, 5) aufweist, welches eine zweistufige Blitz- und Überspannungsschutzschaltung aufweist, die aus einem Grobschutz und einem Feinschutz und einer Entkoppelung zwischen diesen besteht, wobei die Entkopplung durch das LC Glied (4) gebildet ist, wobei der Feinschutz durch eine parallel zur Kapazität (5) angeordnete bidirektionale Schutzdiode (7) und der Grobschutz durch eine gasgefüllte Trennfunkenstrecke (6) gebildet ist, und die Trennfunkenstrecke (6) zündet, wenn die Summe (U_{L} + U_{D}) des Spannungsabfalls an der Spule des LC-Gliedes (4) und der Spannungsabfall U_{D} an der Schutzdiode (7) die Ansprechspannung der Trennfunkenstrecke (6) erreicht.

2. Schutzeinrichtung nach Anspruch 1, **dadurch gekennzeichnet, daß** das Filter (4, 5) ein 50Hz-Filter ist.

3. Schutzeinrichtung nach Anspruch 1, **gekennzeichnet durch** einen parallel zur Kapazität (5) angeordneten Entladewiderstand (8).

4. Schutzeinrichtung nach Anspruch 3, **dadurch gekennzeichnet, daß** der Entladewiderstand (8) hochohmig ausgebildet ist.

## Claims

1. Protection device for pipelines equipped with a cathodic corrosion-protection system, the said protection device comprising a filter (4, 5) consisting of a parallel LC element (4) and a capacitor (5) and having a two-stage lightning and surge protection circuit that consists of coarse protection and fine protection means with decoupling means between them, the said decoupling means being formed by the LC element (4), such that the fine protection means consist of a bi-directional protective diode (7) arranged in parallel with the capacitor (5) and the coarse protection means consist of a gas-filled isolating spark gap (6), and the isolating spark gap (6) is bridged by a spark when the sum (U_{L} + U_{D}) of the voltage drop across the coil of the LC element (4) and the voltage drop across the protective diode (7) reaches the response voltage of the isolating spark gap (6).

2. Protection device according to Claim 1, **characterised in that** the filter (4, 5) is a 50-Hz filter.

3. Protection device according to Claim 1, **characterised in that** it comprises a discharge resistor (8) arranged in parallel with the capacitor (5).

4. Protection device according to Claim 3, **characterised in that** the discharge resistor (8) has a high ohmic resistance.

## Revendications

1. Dispositif de protection pour des pipelines qui sont équipés d'une installation anticorrosion cathodique, comprenant un filtre (4, 5) qui est formé par un élément LC parallèle (4) et par une capacité (5) et qui comporte un circuit à deux étages de protection contre la foudre et les surtensions, qui est constitué d'une protection grossière et d'une protection fine entre lesquelles est disposé un découplage, le découplage étant formé par l'élément LC (4), la protection fine étant formée par une diode de protection bidirectionnelle (7) montée en parallèle à la capacité (5), et la protection grossière étant formée par un éclateur de séparation (6) rempli de gaz,
l'éclateur de séparation s'amorçant lorsque la somme (UL + UD) de la chute de tension aux bornes de la bobine de l'élément LC (4) et de la chute de tension aux bornes de la diode de protection (7) atteint la tension requise de l'éclateur de séparation (6).

2. Dispositif de protection selon la revendication 1, **caractérisé en ce que** le filtre (4, 5) est un filtre 50 Hz.

3. Dispositif de protection selon la revendication 1, **caractérisé par** une résistance de déchargé (8) montée en parallèle avec la capacité (5).

4. Dispositif de protection selon la revendication 3, **caractérisé en ce que** la résistance de décharge (8) est conformée pour être fortement ohmique.
